# EUROPEAN PATENT APPLICATION

(11) **EP 4 513 249 A1**
(43) Date of publication of application: **26.02.2025**
(21) Application number: 24736639.6
(22) Date of filing: 21.06.2024
(51) Int. Cl.: G02B 27/00

(54) **EYE TRACKING SYSTEM AND METHOD, WEARABLE DISPLAY DEVICE, AND ELECTRONIC DEVICE**

(30) Priority: 04.07.2023 CN 202310818446
(71) Applicant: Lemon Inc., Grand Cayman, KY1-1205 (KY); Beijing Zitiao Network Technology Co., Ltd., Beijing 100190 (CN)
(72) Inventor: ZHANG, Bowei, California 90066 (US); LIU, Runyu, California 90066 (US); LI, Xiaokai, Chaoyang District Beijing 100028 (CN)
(74) Representative: Dentons UK and Middle East LLP
(86) International application number: PCT/CN2024/100804
(87) International publication number: WO 2025/007762

(57) **Abstract**

The disclosure provides a system for eye tracking, comprising: at least one light source; at least one metasurface configured to receive light emitted from the at least one light source; at least one detector configured to receive light reflected by an eye of a user from the at least one metasurface and convert the received light into an electrical signal; and configured to control a reflection direction of the light from the at least one light source by the at least one metasurface to enable the reflected light to reach the at least one detector by reflection of the eye of the user. According to the embodiments of the disclosure, all solid-state beam guidance control based on the metasurfaces has the characteristics of fast scanning and wide-angle scanning, resulting in better accuracy of the beam guidance, higher consistency and reliability of the system, and smaller physical sizes.

## Description

### CROSS REFERENCE

The present application claims priority to Chinese Patent Application No. 2023108184464 filed on July 4, 2023 and entitled "SYSTEMS, METHODS, WEARABLE DISPLAY DEVICES AND ELECTRONIC DEVICES FOR EYE TRACKING", which is incorporated herein by reference in its entirety.

### FIELD

The example embodiments of the present disclosure generally relate to the field of computers, and in particular, to a system, a wearable display device, a method, an electronic device and a computer-readable storage medium for eye tracking.

### BACKGROUND

With the rise of Augmented Reality (AR), Virtual Reality (VR), and Mixed Reality (MR) technologies, the use of wearable display devices will become trendy. Providing wearable display devices with stable eye tracking capabilities and accurate eye tracking data may allow users to move freely and interact naturally with their environment.

### SUMMARY

In a first aspect of the present disclosure, a system for eye tracking is provided, comprising: at least one light source; at least one metasurface configured to receive light emitted from the at least one light source; at least one detector configured to receive light reflected by an eye of the user from the at least one metasurface and convert the received light into an electrical signal; and a controller configured to control a reflection direction of the light from the at least one light source by the at least one metasurface to enable the reflected light to reach the at least one detector by reflection of the eye of the user.

In a second aspect of the present disclosure, a wearable display device is provided, comprising a system of the first aspect.

In a third aspect of the present disclosure, a method for eye tracking is provided, comprising: controlling at least one light source to emit light; controlling at least one metasurface to reflect the light emitted by the at least one light source to an eye of the user; controlling at least one detector to receive light from the at least one metasurface reflected by the eye of the user; and converting the received light into an electrical signal.

In a fourth aspect of the present disclosure, a method for eye tracking is provided, comprising: controlling, by using a modulation signal, at least one light source to emit light; controlling at least one metasurface to reflect the light emitted by the at least one light source to an eye of a user; controlling, by using the modulation signal, at least one detector to receive light from the at least one metasurface reflected by the eye of the user; and converting the received light into an electrical signal.

In a fifth aspect of the present disclosure, an electronic device is provided. The device includes at least one processing unit; and at least one memory, the at least one memory being coupled to the at least one processing unit and storing instructions for execution by the at least one processing unit. The instructions, when executed by the at least one processing unit, causing the device to perform the method of the third aspect or the fourth aspect.

In a sixth aspect of the present disclosure, a computer-readable storage medium is provided. The computer-readable storage medium having a computer program stored thereon, the computer program when executed by a processor implementing the method of the third aspect or the fourth aspect.

It would be appreciated that the content described in the section is neither intended to identify the key features or essential features of the present disclosure, nor is it intended to limit the scope of the present disclosure. Other features of the present disclosure will be readily understood through the following description.

### BRIEF DESCRIPTION OF THE DRAWINGS

The above and other features, advantages, and aspects of the various embodiments of the present disclosure will become more apparent in combination with the accompanying drawings and with reference to the following detailed description. In the drawings, the same or similar reference symbols refer to the same or similar elements, wherein:
FIG. 1 illustrates a schematic diagram of an example of an eye tracking system according to some embodiments of the present disclosure;
FIG.2 illustrates a schematic diagram of an example architecture of a control eye tracking system according to some embodiments of the present disclosure;
FIG. 3 illustrates a schematic diagram of an example of a metasurface according to some embodiments of the present disclosure;
FIG. 4 illustrates a schematic diagram of an example of a one-dimensional metasurface according to some embodiments of the present disclosure;
FIG. 5 illustrates a schematic diagram of an example of a two-dimensional metasurface according to some embodiments of the present disclosure;
FIG.6 illustrates a schematic diagram of an example of a reflection direction of light from a metasurface according to some embodiments of the present disclosure;
FIG. 7 illustrates a schematic diagram of an example of processing an electrical signal output by a detector according to some embodiments of the present disclosure;
FIG. 8 illustrates a schematic diagram of an example of a wearable display device according to some embodiments of the present disclosure;
FIG. 9 illustrates a schematic diagram of a process of a method of eye tracking according to some embodiments of the present disclosure;
FIG. 10 illustrates a schematic diagram of a process of a method of eye tracking according to some embodiments of the present disclosure; and
FIG. 11 illustrates a block diagram of a device capable of implementing a plurality of embodiments of the present disclosure.

### DETAILED DESCRIPTION

It would be appreciated that before using the technical solution disclosed in each embodiment of the present disclosure, users should be informed of the type, the scope of use, the use scenario, etc. of the personal information involved in the present disclosure in an appropriate manner and authorized in accordance with relevant laws and regulations.

For example, in response to receiving an active request from a user, a prompt message is sent to the user to explicitly prompt the user that the operation requested operation by the user will need to obtain and use the user's personal information, so that users may select whether to provide personal information to the software or the hardware such as an electronic device, an application, a server or a storage medium that perform the operation of the technical solution of the present disclosure according to the prompt information.

As an optional but non-restrictive implementation, in response to receiving the user's active request, the method of sending prompt information to the user may be, for example, a pop-up window in which prompt information may be presented in text. In addition, the pop-up windows may also contain selection controls for users to choose "agree" or "disagree" to provide personal information to electronic devices.

It would be appreciated that the above notification and acquisition of user authorization process are only schematic and do not limit the implementations of the present disclosure. Other methods that meet relevant laws and regulations may also be applied to the implementation of the present disclosure.

It would be appreciated that the data involved in this technical solution (comprising but not limited to the data itself, data acquisition or use) shall comply with the requirements of corresponding laws, regulations, and relevant provisions.

The embodiments of the present disclosure will be described in more detail below with reference to the accompanying drawings. Although certain embodiments of the present disclosure are shown in the drawings, it would be appreciated that the present disclosure may be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

It should be noted that the titles of any sections/subsections provided in this article are not restrictive. This article describes various types of embodiments throughout, and any type of embodiments may be included within any section/subsection. In addition, the embodiments described in any section/subsection may be combined in any way with any other embodiments described in the same section/subsection and/or different section/subsection.

In the description of the embodiments of the present disclosure, the term "comprising", and similar terms would be appreciated as open inclusion, that is, "comprising but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. The terms "first", "second", and/or the like may refer to different or same objects. Other explicit and implicit definitions may also be included below.

As briefly mentioned above, the VR technology, AR technology and MR technology integrate virtual content and real scenes by using a combination of a hardware device and various technical means to provide users with a unique sensory experience. VR is using a computer to simulate a virtual world in a three-dimensional space to provide users with an immersive experience in visual, auditory, tactile, and other aspects. AR enables a real environment and a virtual object to overlay into the same space and coexist in real time. MR is a new visualization environment that integrates the real world and the virtual world, where an object in a physical real-world scene coexists with an object in the virtual world in real time.

Eye tracking refers to tracking of an eye movement by measuring a position of a gaze point of an eye or a movement of the eye relative to a head. In an eye tracking system, an optical switch and a mirror are usually used to change a direction of a light beam from a light source and complete a scanning of a human eye. Eye tracking may be applied in the field of Extended Reality (XR) which includes AR, VR, MR and the like.

Some eye tracking systems use the Micro-Electro-Mechanical System (MEMS) technology to enable deflection scanning of a beam direction by a movement of a scanning mirror. However, a scanning range, a scanning speed, and a scanning mode of a MEMS scanning mirror are limited, particularly in an open-loop system, which cannot provide feedback and correction for output deviations and disturbances, resulting in a decrease in the accuracy of a beam guidance. In addition, the physical size of the scanning mirror, the reliability of movement parts, or the process consistency may all become a restriction factor which applied at a near eye display device.

Embodiments of the present disclosure proposes a system for eye tracking. According to various embodiments of the present disclosure, eye tracking systems include: a light source, a metasurface, a detector, and a controller. The controller controls a reflection direction of light from the at least one light source by the metasurface, to enable the reflected light to reach the detector by reflection of an eye of the user. The detector receives the light reflected by the eye of the user from the at least one metasurface and converts the received light into an electrical signal. Therefore, beam guidance is enabled by using a characteristic of all solid-state of the metasurface, which has a better accuracy and a higher reliability. In addition, it may form a beam in any direction of the field of view at any time, without being limited by scanning modes or requiring operate in resonance, with the advantages of fast scanning and wide scanning angles.

The embodiments of the present disclosure are described below in conjunction with the accompanying drawings.

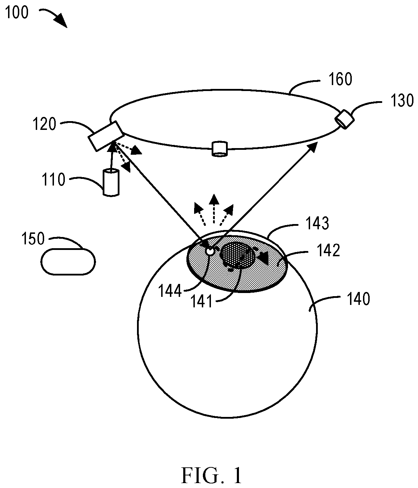

FIG. 1 illustrates a schematic diagram of an example system 100 of an eye tracking system according to some embodiments of the present disclosure. The system 100 includes a light source 110, a metasurface 120, a detector 130, and a controller 150. Light emitted by the light source 110 is received and reflected by the metasurface 120. The reflected light is reflected again by an eye of a user 140 and reaches the detector 130.

The light source 110 may be an infrared or near-infrared light source. Due to the invisibility of infrared light, the use of infrared light sources in the eye tracking system does not interfere with the eye of the user and may accurately distinguish a boundary between a pupil and an iris, as well as the iris and a sclera in the eye. In some embodiments, the light source 110 may use a Vertical Cavity Surface Emitting Laser (VCSEL) chip to enable the emission of the near-infrared laser beam. The VCSEL chip includes an array of emission units, each emission unit emitting a separate laser beam. The laser beams emitted by the plurality of emission units are incoherent with each other and are arranged dispersedly in space. In some embodiments, the system 100 also includes a beam adjuster configured to adjust a direction or a shape of the beam emitted by the light source 110. The beam adjuster, for example a collimating lens, configured to receive the light emitted by the light source 110, collimate it, and then emit it. The beam adjuster, for example, is a Diffractive Optical Element (DOE), configured to receive the light emitted by the light source 110, homogenize it, and then emit it.

The metasurface 120 may be implemented as a tunable metasurface. The controller 150 may dynamically regulate optical parameters (for example amplitude, phase, polarization) of the metasurface 120 based on schemes such as mechanical driving, modulation of carrier concentration, phase change materials, and the like. For example, structure units in the metasurface 120 are driven by microelectromechanical or nanomechanical systems, the physical shape and spatial arrangement of these structural units may be reconfigured to enable dynamic controlling. For example, dynamic controlling may be enabled by changing the carrier concentration of structural units in the metasurface 120. For example, phase change materials are induced to undergo phase changes by external excitation, and the difference in a refractive rate between different phases is used for controlling. With these schemes, the tunable metasurfaces may introduce sudden changes of the optical parameters to enable dynamic controlling, thereby breaking the dependence of a traditional optical component on a propagation path. In some embodiments, the metasurface 120 is a reflective metasurface. The metasurface 120 is used to manipulate the laser beam. Specifically, the metasurface 120 receives a near-infrared light from the light source 110, the controller 150 controls the reflection direction of the near-infrared light by controlling the metasurface 120, so that the near-infrared light is reflected to the eye of the user 140.

The controller 150 controls the light emitted by the light source 110 to scan the eye 140 by controlling the metasurface 120. In some embodiments, the controller 150 controls the light emitted by the light source 110 to scan the iris area to obtain the direction of the line of sight and estimate the position of the pupil.

The system 100 may include one or more detectors 130. The detector 130 may be a Photo-Diode(PD), configured to receive the light reflected by the eye of the user 140 from the metasurface 120 and convert the received light into an electrical signal. The detector 130 may also be a Position Sensing Detector(PSD), configured to provide position information to the controller 150. The eye 140 includes a pupil 141, an iris 142, and a cornea 143. The iris 142 is a colored part surrounding the pupil 141. The cornea 143 is a transparent part covering an outer layer of the pupil 141 and the iris 142. Light reflected in different ways may be generated as the light shines on different parts of the eye 140. For example, when the light shines on the cornea 143, a specular reflection occurs and a light spot 144 is formed on the cornea 143. For example, when the light shines on the iris 142, a diffuse reflection occurs. According to such reflection characteristics, the controller 150 may determine the position of the pupil/iris based on an area or range of the light of the diffuse reflection, and the controller 150 may also determine the position of the cornea based on the position of the light spot of the specular reflection.

In some embodiments, the system 100 also includes a lens 160. The lens 160 may be a VR display lens or include an AR lens, thus enabling the system 100 to be applied in the field of VR or AR. The metasurface 120 and the detector 130 may be arranged along the lens 160 or within the lens 160.

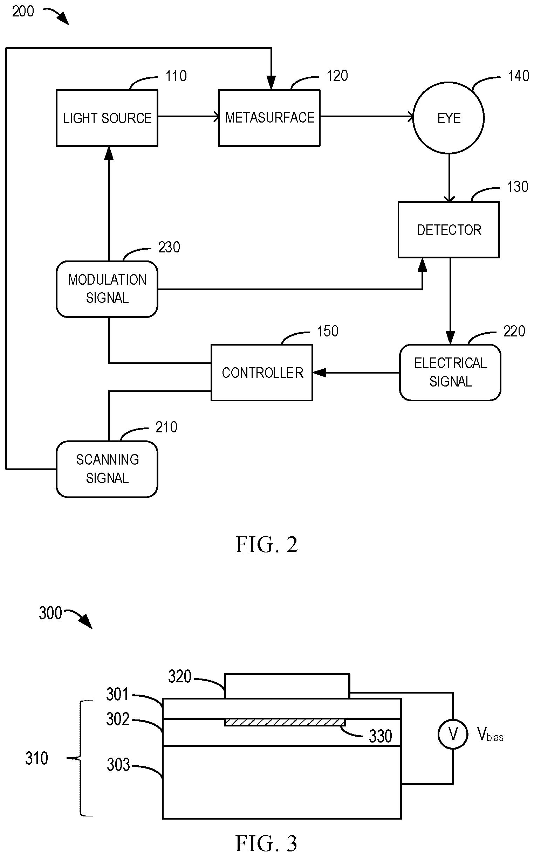

FIG. 2 illustrates a schematic diagram of an example architecture 200 of controlling an eye tracking system according to some embodiments of the present disclosure. In the architecture 200, the controller 150 controls the metasurface 120 by using a scanning signal 210. Furthermore, the controller 150 controls the light source 110 and the detector 130 by using a modulation signal 230. Furthermore, the detector 130 receives the light reflected by the eye of the user 140 and converts it into an electrical signal, and the controller 150 processes the electrical signal 220. The control procedure and the processing procedure will be described below respectively.

Depending on the specific implementation of the metasurface 120, the controller 150 may use an appropriate control approach. In some embodiments, the metasurface 120 may be implemented as an electrical tunable metasurface. By changing the carrier concentration in the metasurface 120, the phase shift may be controlled, thereby enabling a control of the reflection direction of the light.

FIG. 3 illustrates a schematic diagram of an example 300 of a metasurface according to some embodiments of the present disclosure. The example 300 is an electrical tunable metasurface of Transparent Conductive Oxide (TCO) materials combined with a metal structure. FIG. 3 illustrates a cross-sectional view of the electrically tunable metasurface. The example 300 includes a substrate 310 and a structural unit 320.

The substrate 310 may include a plurality of layers of materials for providing electrical isolation, accumulated carriers, physical support, and the like. As an example, the substrate 310 includes an insulation layer 301, a TCO layer 302 and a substrate layer 303. The insulation layer 301, for example, uses aluminum oxide (Al₂O₃) to electrically insulate the structural unit 320 from the TCO layer 302. The TCO layer 302 has a conductivity close to that of a metal, for example using Indium Tin Oxide (ITO) material. It has a near zero dielectric constant point in the near-infrared band. The substrate layer 303, for example, uses gold (Au). The structural unit 320 may also be referred to as a nanoantenna, for example, by using the metal materials Au, which is the same as the substrate layer 303.

By applying an external electric field, the concentration of free carriers in conductive materials may be changed, thereby implementing the electrical tunable metasurfaces. In the example shown in FIG. 3, applying a bias voltage V_{bias} between the structural unit 320 and the substrate layer 303 may form a charge accumulation layer 330. By adjusting the bias voltage V_{bias}, the carrier concentration may be increased, thereby enabling the control of the reflection direction of the light. Based on such a principle, the controller 150 provides, by using the scanning signal 210, the bias voltage to the structural unit 320. The example 300 only includes one structural unit 320, and for a metasurface that includes the plurality of structural units, the controller 150 may provide a one-dimensional bias scheme and a two-dimensional bias scheme.

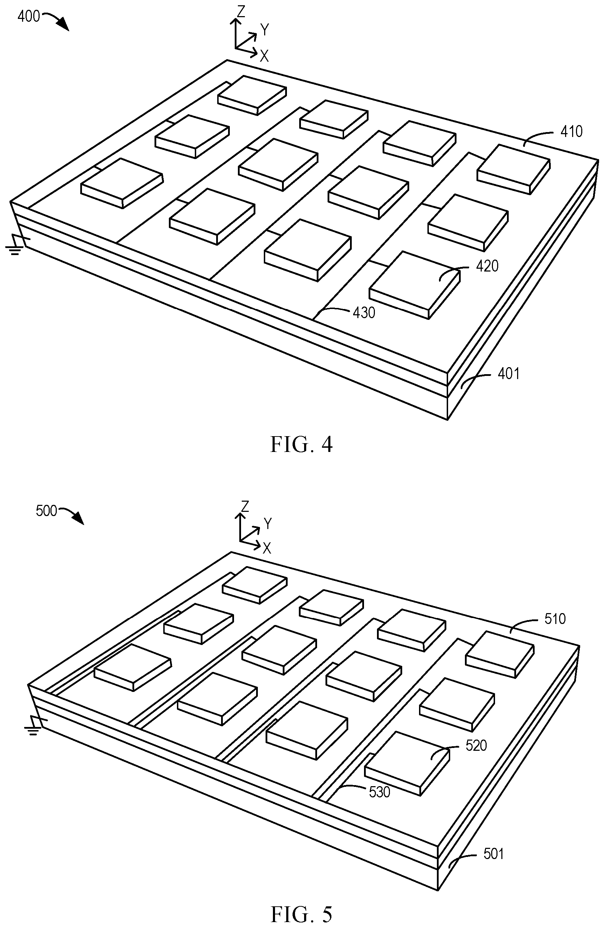

FIG. 4 illustrates a schematic diagram of an example 400 of a one-dimensional metasurface according to some embodiments of the present disclosure. The one-dimensional metasurface refers to a metasurface using a one-dimensional bias scheme. The example 400 includes a substrate 410, a structural unit 420, and a control line 430. A substrate layer 401 in both the structural unit 420 and the substrate 410 are made of metals, for example gold, silver, aluminum, etc. The materials of the two may or may not be the same. The substrate layer is grounded. The control line 430 is a metal wire. Each control line 430 extends in the Y direction to connect the plurality of structural units 420, thereby forming a metasurface arranged linearly and periodically in a one dimension. The array period and height of the structural unit 420 are both sub-wavelength scales. The controller 150 transmits the scanning signal 210 by each control line 430 to simultaneously provide the bias voltage to the plurality of structural units 420 connected to it, thereby enabling the one-dimensional bias scheme. It would be appreciated that the plurality of structural units 420 in the example 400 may be arranged regularly with equal spacing or alternately, and no limitation is suggested in this disclosure.

FIG. 5 illustrates a schematic diagram of an example 500 of a two-dimensional metasurface according to some embodiments of the present disclosure. The two-dimensional metasurface is a metasurface that adopts a two-dimensional bias scheme. The example 500 includes a substrate 510, a structural unit 520, and a control line 530. A substrate layer 501, the structural unit 520, and the control line 530 in the substrate 510 are all made of metals, for example gold, silver, copper, aluminum, and the like. The materials of the three may or may not be the same. The substrate layer 501 is grounded. Each control line 530 may extend in the Y and X directions and connect to the structural unit 520, thereby forming a metasurface arranged linearly and periodically in two - dimensions. The array period and height of the structural unit 520 are both sub-wavelength scales. The control line 530 is a metal wire. The controller 150 may provide, using scanning signals, the bias voltage to each structural unit 520, enabling more precise control of the metasurface. It would be appreciated that the plurality of structural units 520 in the example 500 may be arranged regularly with equal spacing or alternately, and no limitation is suggested in this disclosure.

For the eye tracking system, it is necessary to direct the light towards the direction of the eye of the user. Whether using the one-dimensional or two-dimensional metasurface, the controller 150 may enable a control of the reflected light in the two-dimensional direction by controlling the bias voltage applied at the metasurface, thereby enabling the light scanning of the eye of the user (as shown in the curved dashed arrow in FIG. 1).

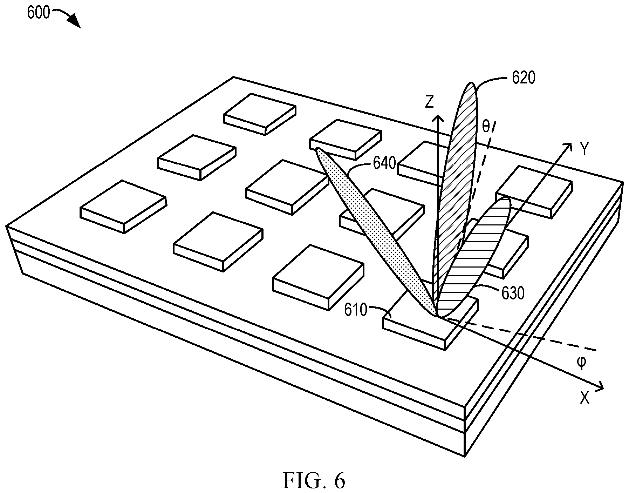

FIG. 6 illustrates a schematic diagram of an example 600 of a reflection direction of light from a metasurface according to some embodiments of the present disclosure. A structural unit 610 in the example 600 receives and reflects light emitted from the light source 110. The controller 150 may control the reflection direction of the light to rotate around the X-axis. For example, the reflection direction 620 corresponds to a pitch angle of θ. The controller 150 may also control the reflection direction of the light to rotate around the Z-axis. For example, the reflection direction 630 corresponds to a yaw angle of ϕ. Through these two approaches, the controller 150 enables a control of the reflected light in a one-dimensional direction. The controller 150 may also control the reflection direction of the light to rotate around both the X and Z axes simultaneously, for example, the reflection direction 640, thereby enabling a control of the reflected light in the two-dimensional direction.

The control of the metasurface 120 by the controller 150 using the scanning signal 210 has been described above in various embodiments. Returning to FIG. 2, alternatively, or in addition, the controller 150 processes the electrical signal 220 output by the detector 130 to determine the pupil position and the direction of the line of sight.

As described above, the position of the pupil/iris may be determined based on the diffuse reflection of the light, and the position of the cornea may be determined based on the specular reflection of the light. In order to separate the diffuse reflection of the light and the specular reflection of the light, different detectors 130 may be used.

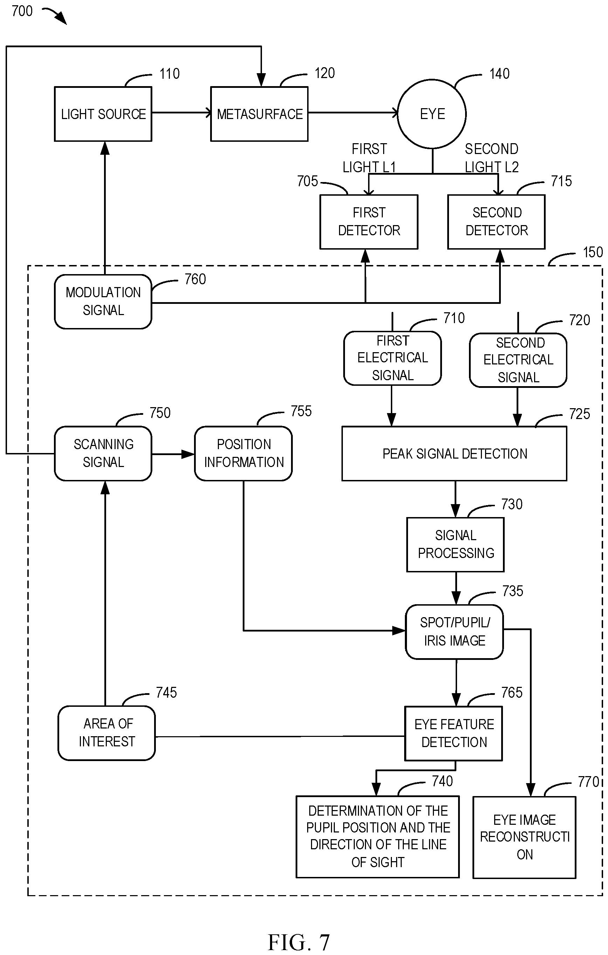

FIG. 7 illustrates a schematic diagram of an example architecture 700 of controlling an eye tracking system according to some embodiments of the present disclosure. The example architecture 700 is extended on the basis of the example architecture 200. For example, the detector 130 further includes a first detector 705 and a second detector 715.

The first detector 705 may be, for example, a diffuse reflection detector. During a scanning process of the eye 140 by the metasurface 120 controlled by the controller 150 for one period, the first light L1 of the diffuse reflection is continuously received by the first detector 705. Such light may include an infrared light from the light source 110 or an ambient light. The controller 150 performs peak signal detection 725 and signal processing 730 (for example, noise removal) on the first electrical signal 710 output by the first detector 705 to generate pixel-level pupil/iris images 735. Pixels in the image with electrical signals peaks below the first threshold correspond to the pupil area, while pixels with the peaks above the first threshold correspond to the iris area. Based on this image, eye feature detection 765 may be performed, and the position of the pupil center and the size of the pupil may be determined according to the detected eye features. Accurate pupil information may be obtained by using a smaller number of (for example, 1 to 2) first detectors 705. This facilitates system miniaturization and power consumption reduced. In some embodiments, the controller 150 may determine 740 the pupil position and the direction of the line of sight by using relevant algorithms, based on the results of eye feature detection 765 (i.e., the detected eye features). The pupil position and the direction of the line of sight may be used for eye tracking, identity recognition, and the like.

In some embodiments, a spot/pupil/iris image 735 may be used for eye image reconstruction 770. For example, the controller 150 controls, by using the scanning signal 750, the reflection direction of the light emitted by the metasurface 120 to the light source 110, and scans the eye 140 by the reflected light. The controller 150 reconstructs a three-dimensional image of the eye based on the generated spot/pupil/iris image 735 during the scanning process. Alternatively, or in addition, the controller 150 may implement the scanning of the eye 140 based on the predetermined scanning mode. The scanning mode is determined based on parameters such as a scanning route, a scanning range, or a light intensity and/or the like.

The second light L2 reflected by the mirror is received directionally by the second detector 715. The second detector 715 is, for example, a light-emitting diode. The controller 150 may generate an image 735 of a light spot on the cornea according to the second electrical signal 720 output by the second detector 715. The pixel in the image with a peak electrical signal greater than the second threshold corresponds to the center position of the spot. As the central position of a corneal curvature is on a bisector (normal) of the angle between the direction of the incident light and the direction of the reflected light, the controller 150 uses the scanning signal to control the bias voltage of the metasurface 120, thereby controlling the reflection direction of the light, i.e. the incident direction reaching the eye 140. Therefore, based on position information 755 in the scanning signal, the direction of the incident light on the cornea may be determined. The second detector 715 may only receive the reflected light from the cornea directionally, and therefore the direction of the reflected light from the cornea may be determined based on the physical position of the second detector 715. In some embodiments, the second reflected light L2 is received by a position sensing detector. The position sensing detector is an optical detector that may measure the continuous position of the light points on the detector surface, and may convert the position of the light points on the photosensitive surface into electrical signals. Such a detector may provide position information to the controller 150 to replace the physical position of the detector. Therefore, during system calibration, there is no need to calibrate and store the physical position of the detector. During eye tracking, the controller 150 determines the direction of the reflected light of the corneal by the position information in the electrical signal output by the position sensing detector, in order to finally determine the direction of the line of sight.

In some embodiments, if the radius of the cornea is known, the position of the center of the cornea may be determined according to the distance from the center of the cornea to the spot of the light being equal to the radius of the cornea. That is, the position of the center of the cornea may be determined from a single spot detected by a single second detector 715. This greatly reduces the number of detectors required and facilitates miniaturization and lower power consumption of the system.

In other embodiments, if the radius of the cornea is an unknown quantity, the plurality of second light L2 reflected from the specular surface is sequentially received by the plurality of second detectors 715 arranged dispersedly. The controller 150 determines a plurality of normal directions according to the center position of these light spots, the direction of the incident light, and the direction of the reflected light. Furthermore, it determines the position of the center of the cornea according to an intersection point of the plurality of normal directions. Considering a curvature of the cornea, a very accurate corneal center position may be obtained by using a relatively small number of (e.g., 3 to 4) light-emitting diodes. This facilitates miniaturization and reduced power consumption of the system.

In this way, according to the line connecting the center position of the pupil and the center position of the cornea, the controller 150 may determine the direction of line of sight of the eye of the user 140, thereby enabling the eye tracking function.

In some embodiments, based on the output of determining 740 the pupil position and the direction of the line of sight, the controller 150 may generate an area of interest (ROI) 745. The controller 150 may adjust the scanning range of the scanning signal 750 for the eye of the user 140 based on the area of interest 745, thereby improving the speed and efficiency of eye tracking.

For the eye tracking system, continuously pursuing small size and low power consumption facilitates device miniaturization. Alternatively, or in addition, in the example of FIG. 2, the controller 150 controls the light source 110 and the detector 130 by using the modulation signal 230. In the example of FIG. 7, the controller 150 controls the light source 110, the first detector 705, and the second detector 715 by using the modulation signal 760. While controlling the light source 110 to emit light, turning on the corresponding detector for reception facilitates reduction of system power consumption.

In the example of FIG. 2, the controller 150 uses the modulation signal 230 to provide a driving voltage to the light source 110 to control the light source 110 to emit light. Synchronously, the controller 150 uses the modulation signal to provide a bias voltage to the detector 130 to enable the detector 130 to receive light reflected by the eye of the user 140 from the metasurface 120. If the light source 110 does not emit light, the detector 130 is turned off, thereby reducing system power consumption. It would be appreciated that although not shown in FIG. 2, the modulation signal 230 provided by the controller 150 may be converted by any suitable driving circuit before providing the driving voltage to the light source 110, and the modulation signal 230 may also be converted by any suitable switching circuit before providing the bias voltage to the detector 130.

In the example of FIG. 7, the controller 150 provides the driving voltage to the light source 110 by using the modulation signal 760 to control the light source 110 to emit light. Synchronously, the controller 150 provides the bias voltage to the first detector 705 by using the modulation signal 760, to turn on the first detector 705 to receive the first light L1. As described above, the first light L1 may include an infrared light from the light source 110 or may include an ambient light. Alternatively, or in addition, the controller 150 continuously provides the bias voltage to the first detector 705 to ensure that the first detector 705 is always on. Further, the controller 150 provides the bias voltage to the second detector 715 by using the modulation signal 760, to turn on the second detector 715 to receive the second light L2. As described above, the second detector 715 receives directionally the second light L2 reflected from the specular surface of the cornea. Thus, it is possible to turn on the second detector again when the reflected light from the metasurface 120 arrives at a corresponding position of or near the cornea 715, and to determine the corresponding position as the center position of the light spot when the peak value of the second electrical signal 720 output therefrom is greater than the second threshold. It would be appreciated that although not shown in FIG. 7, the modulation signal 760 provided by the controller 150 may be converted by any suitable driving circuitry before providing the driving voltage to the light source 110, and the modulation signal 760 may also be converted by any suitable switching circuitry before providing the bias voltage to the first detector 705 and the second detector 715.

The control approach for the eye tracking system have been described in the various embodiments described above. It would be appreciated that although the above control approaches are described by the controller 150 as the executor, these control approaches may be implemented by different controllers, or the eye tracking system may include the plurality of controllers 150 for controlling the light source, the metasurfaces, the detectors, and the various signal processing, and the like, respectively.

The embodiments of the present disclosure also provide a wearable display device, which may include the eye tracking system described above.

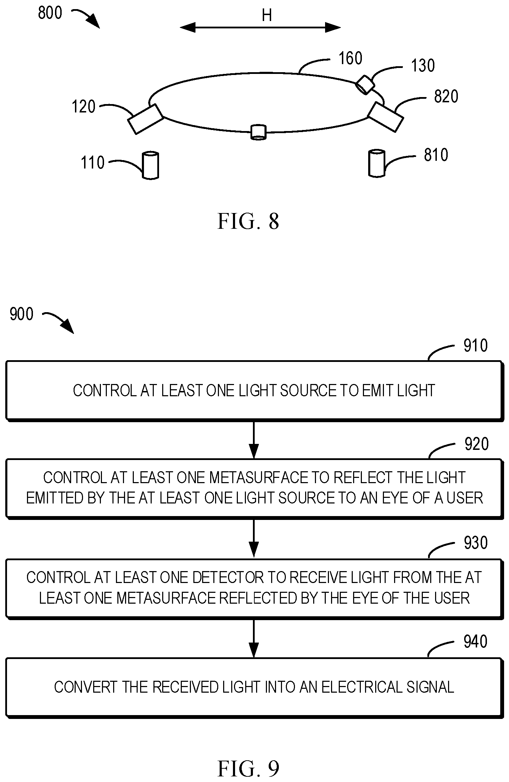

FIG. 8 illustrates a schematic diagram of an example 800 of a wearable display device according to some embodiments of the present disclosure. The wearable display device 800, for example may be an AR, VR or MR display device, including, but not limited to, a head-mounted display, a smart glasses, a user behavior analysis device, and/or the like. The position relationship of various components in the wearable display device 800 will be described below from a structural perspective.

As an example of components corresponding to a single eye, in some embodiments, the wearable display device 800 includes the light source 110, the metasurface 120, the plurality of detectors 130, and the lens 160. The lens 160 is, for example, a VR display lens or includes an AR lens. The plurality of detectors 130 are located near an edge of the lens 160 so as not to obstruct the line of sight, but also to be located as close as possible to the eye of the user 140, for example a right eye, to facilitate reception of the light reflected from the eye 140. Further, the plurality of detectors 130 may be arranged around the lens 160. The light source 110 and the metasurface 120 are located near an end of the lens 160 along the horizontal axis H of the lens 160. In the case that the lens 160 is a common elliptical shape, the horizontal axis H may typically be a long axis of an ellipse. In the case that the user wears the wearable display device 800, the light source 110 and the metasurface 120 are, for example, close to a nose of the user.

Continuing with the example of the components corresponding to a single eye, in some embodiments, the wearable display device 800 further includes a light source 810 and a metasurface 820. The light source 110 and the metasurface 120 are located near one of the end of the lens 160 along the horizontal axis H of the lens 160, and the light source 810 and the metasurface 820 are located near the other end of the lens 160 along the horizontal axis H of the lens 160. In the case that a user wears the wearable display device 800, the light source 110 and the metasurface 120 are, for example, close to a nose of the user, the light source 810 and the metasurface 820 are, for example, close to a temple of the user.

### Example process

FIG. 9 illustrates a flowchart of a process 500 for eye tracking according to some embodiments of the present disclosure. The process 900 may be implemented at the system 100. The process 900 is described below with reference to FIG. 1.

At block, the system 100 controls at least one light source to emit light.

At block, control at least one metasurface to reflect the light emitted by the at least one light source to the eye of the user.

At block, the system 100 controls at least one detector to receive the light reflected by the eye of the user from the at least one metasurface.

At block 940, the system 100 converts the received light into an electrical signal.

In some embodiments, the system 100 controls, by using a scanning signal, a bias voltage of a structural unit in the at least one metasurface to control the reflection direction of the light.

In some embodiments, the system 100 determines a pupil position and/or line of sight direction of the eye of the user by at least one of: position information in the scanning signal, the electrical signal, and a position of the detector that outputs the electrical signal.

In some embodiments, the at least one detector includes a first detector, the system 100 controls the first detector to receive a first light reflected from the at least one metasurface by a pupil and/or an iris of the eye of the user; converts the first light into a first electrical signal; and determines, at least based on the first electrical signal, the pupil position of the eye of the user.

In some embodiments, at least one detector includes a plurality of second detectors, the system 100 controls the plurality of second detectors to receive a second light from the at least one metasurface reflected by a cornea of the eye of the user; converts the second light into a second electrical signal; and determines, at least based on the second electrical signal, the direction of line of sight of the eye of the user.

In some embodiments, the system 100 controls the plurality of second detectors to provide position information of the detector.

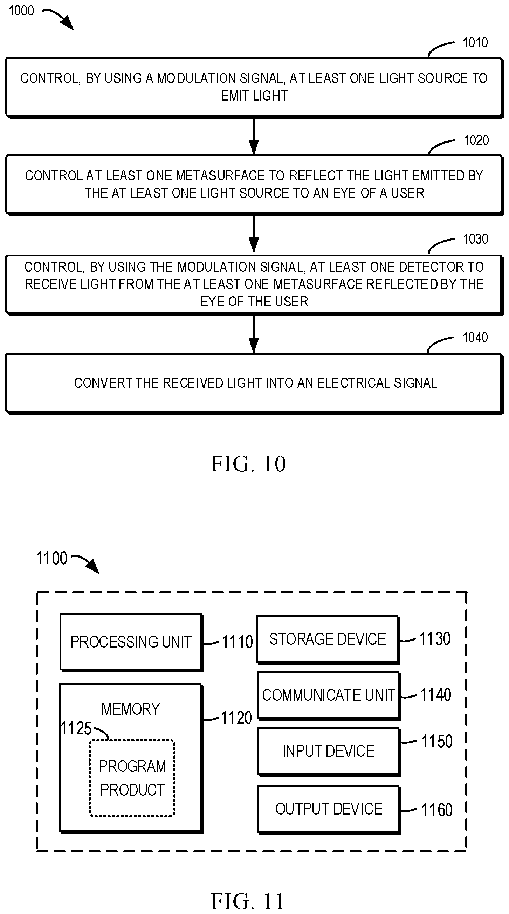

FIG. 10 illustrates a flowchart of a process 1000 for eye tracking according to some embodiments of the present disclosure. The process 1000 may be implemented at the system 100. The process 1000 is described below with reference to FIG. 1.

At block 1010, the system 100 controls, by using a modulation signal, at least one light source to emit light.

At block 1020, the system 100 controls at least one metasurface to reflect the light emitted by the at least one light source to an eye of the user.

At block 1030, the system 100 controls, by using the modulation signal, at least one detector to receive light from the at least one metasurface reflected by the eye of the user.

At block 1040, the system 100 converts the received light into an electrical signal.

In some embodiments, the at least one light source comprises a first light source and a second light source, and the at least one metasurface comprises a first metasurface associated with the first light source and a second metasurface associated with the second light source. The system 100 controls, by using different modulation signals with a phase difference, the first light source and the second light source emit light respectively; and controls, by using the different modulation signals with the phase difference, the at least one detector to receive light from the first metasurface and the second metasurface reflected by the eye of the user simultaneously.

In some embodiments, at least one detector includes a first detector, the system 100 controls the first detector to receive the first light reflected from the at least one metasurface by the pupil and/or the iris of the eye of the user; converts the first light into the first electrical signal; and determines, at least based on the first electrical signal, the pupil position of the eye of the user.

In some embodiments, at least one detector includes a plurality of second detectors, the system 100 controls the plurality of second detectors to receive the second light from the at least one metasurface reflected by the cornea of the eye of the user; converts the second light into a second electrical signal; and determines, at least based on the second electrical signal, the direction of line of sight of the eye of the user.

In some embodiments, the system 100 controls the plurality of second detectors to provide the position information of the detector.

### Example device

FIG. 11 illustrates a block diagram of an example electronic device 1100 in which one or more embodiments of the present disclosure may be implemented. It would be appreciated that the electronic device 1100 shown in FIG. 11 is only an example and should not constitute any restriction on the function and scope of the embodiments described herein. The electronic device 1100 shown in FIG. 11 may be used to implement the system100 of FIG. 1.

As shown in FIG. 11, the electronic device 1100 is in the form of a general computing device. The components of the electronic device 1100 may comprise, but are not limited to, one or more processors or processing units 1110, a memory 1120, a storage device 1130, one or more communication units 1140, one or more input devices 1150, and one or more output devices 1160. The processing units 1110 may be actual or virtual processors and may execute various processes according to the programs stored in the memory 1120. In a multiprocessor system, multiple processing units execute computer executable instructions in parallel to improve the parallel processing capability of the electronic device 1100.

The electronic device 1100 typically comprises a variety of computer storage media. Such media may be any available media that is accessible to the electronic device 1100, comprising but not limited to volatile and non-volatile media, removable and non-removable media. The memory 1120 may be volatile memory (such as registers, caches, random access memory (RAM)), nonvolatile memory (such as a read-only memory (ROM), an electrically erasable programmable read-only memory (EEPROM), a flash memory), or some combination thereof. The storage device 1130 may be any removable or non-removable medium, and may comprise machine-readable medium, such as a flash drive, a disk, or any other medium which may be used to store information and/or data (for example training data for training) and may be accessed within the electronic device 1100.

The electronic device 1100 may further comprise additional removable/non-removable, volatile/non-volatile storage medium. Although not shown in FIG. 11, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 1120 may comprise a computer program product 1125, which comprises one or more program modules configured to execute various methods or actions of the various embodiments disclosed herein.

The communication unit 1140 implements communication with other computing devices via a communication medium. In addition, functions of components in the electronic device 1100 may be implemented by a single computing cluster or multiple computing machines, which may communicate through a communication connection. Therefore, the electronic device 1100 may be operated in a networking environment using a logical connection with one or more other servers, a network personal computer (PC), or another network node.

The input device 1150 may be one or more input devices, such as a mouse, a keyboard, a trackball, etc. The output device 1160 may be one or more output devices, such as a display, a speaker, a printer, etc. The electronic device 1100 may also communicate with one or more external devices (not shown) through the communication unit 1140 as required. The external device, such as a storage device, a display device, etc., communicate with one or more devices that enable users to interact with the electronic device 1100, or communicate with any device (for example, a network card, a modem, etc.) that makes the electronic device 1100 communicate with one or more other computing devices. Such communication may be executed via an input/output (I/O) interface (not shown).

According to example implementation of the present disclosure, there is provided a computer-readable storage medium on which a computer-executable instruction or computer program is stored, wherein the computer-executable instructions are executed by a processor to implement the methods described above.

Various aspects of the present disclosure are described herein with reference to the flow chart and/or the block diagram of the method, the device, the apparatus, and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers, or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions comprises a product, which comprises instructions operable to implement various aspects of the functions/acts specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatus, or other devices are operable to implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment, or instructions, which includes one or more executable instructions for implementing the specified logic function. In some alternative implementations, the functions marked in the block may also occur in a different order from those marked in the drawings. For example, two consecutive blocks may actually be executed in parallel, and sometimes may also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description provides a number of examples, not exhaustive, and is not limited to the disclosed implementations. Without departing from the scope and spirit of the described implementations, many modifications and changes are obvious to ordinary skill in the art. The selection of terms used in this article aims to best explain the principles, practical application, or improvement of technology in the market of each implementation, or to enable others of ordinary skill in the art to understand the various embodiments disclosed herein.

## Claims

1. A system for eye tracking, comprising:
at least one light source;
at least one metasurface configured to receive light emitted from the at least one light source;
at least one detector configured to receive light reflected by an eye of a user from the at least one metasurface and convert the received light into an electrical signal; and
a controller configured to control a reflection direction of the light from the at least one light source by the at least one metasurface to enable the reflected light to reach the at least one detector by reflection of the eye of the user.

2. The system of claim 1, wherein the controller is configured to:
control, by using a scanning signal, a bias voltage of a structural unit in the at least one metasurface to control the reflection direction of the light.

3. The system of claim 2, wherein the controller is further configured to:
determine a pupil position and/or a gazing direction of the eye of the user by at least one of:
position information in the scanning signal,
the electrical signal,
a position of the detector that outputs the electrical signal.

4. The system of claim 1, wherein the controller is configured to:
control, by using a modulation signal, the at least one light source to emit light; and
control, by using the modulation signal, the at least one detector to receive light from the at least one metasurface reflected by the eye of the user.

5. The system of claim 1, wherein the at least one light source comprises a first light source and a second light source, and the at least one metasurface comprises a first metasurface associated with the first light source and a second metasurface associated with the second light source, the controller is further configured to:
control, by using different modulation signals with a phase difference, the first light source and the second light source to emit the light respectively; and
control, by using the different modulation signals with the phase difference, the at least one detector to receive light from the first metasurface and the second metasurface reflected by the eye of the user simultaneously.

6. The system of claim 1, wherein the at least one detector comprises:
a first detector configured to receive first light from the at least one metasurface reflected by a pupil and/or an iris of the eye of the user;
convert the first light into a first electrical signal; and
provide the first electrical signal to the controller to determine a pupil position of the eye of the user.

7. The system of claim 1, wherein the at least one detector comprises:
a plurality of second detectors configured to receive second light from the at least one metasurface reflected by a cornea of the eye of the user;
convert the second light into a second electrical signal; and
provide the second electrical signal to the controller to determine a gazing direction of the eyes of the user.

8. The system of claim 7, wherein the plurality of second detectors are further configured to provide position information of a detector to the controller.

9. A wearable display device comprises a system according to any one of claims 1 to 8.

10. The wearable display device of claim 9, further comprising:
a lens,
the at least one detector being located near an edge of the lens, the at least one light source and the at least one metasurface being located near an end of the lens along a horizontal axis of the lens.

11. A method of eye tracking, comprising:
controlling at least one light source to emit light;
controlling at least one metasurface to reflect the light emitted by the at least one light source to an eye of a user;
controlling at least one detector to receive light from the at least one metasurface reflected by the eye of the user; and
converting the received light into an electrical signal.

12. The method of claim 11, wherein controlling the at least one metasurface to reflect the light emitted by the at least one light source to the eye of the user comprises:
controlling, by using a scanning signal, a bias voltage of a structural unit in the at least one metasurface to control the reflection direction of the light.

13. The method of claim 12, further comprising:
determining a pupil position and/or a gazing direction of the eye of the user by at least one of:
position information in the scanning signal,
the electrical signal,
a position of the detector that outputs the electrical signal.

14. The method of claim 11, wherein the at least one detector comprises a first detector, and the method further comprises:
controlling the first detector to receive first light from the at least one metasurface reflected by a pupil and/or an iris of the eye of the user;
converting the first light into a first electrical signal; and
determining the pupil position of the eye of the user based on at least the first electrical signal.

15. The method of claim 11, wherein the at least one detector comprises a plurality of second detectors, and the method further comprises:
controlling the plurality of second detectors to receive second light from the at least one metasurface reflected by a cornea of the eye of the user;
converting the second light into a second electrical signal; and
determining a gazing direction of the eye of the user based on at least the second electrical signal.

16. The method of claim 15, further comprising:
controlling the plurality of second detectors to provide position information of a detector.

17. A method of eye tracking, comprising:
controlling, by using a modulation signal, at least one light source to emit light;
controlling at least one metasurface to reflect the light emitted by the at least one light source to an eye of a user;
controlling, by using the modulation signal, at least one detector to receive light from the at least one metasurface reflected by the eye of the user; and
converting the received light into an electrical signal.

18. The method of claim 17, wherein the at least one light source comprises a first light source and a second light source, and the at least one metasurface comprises a first metasurface associated with the first light source and a second metasurface associated with the second light source, the method further comprising:
controlling, by using different modulation signals with a phase difference, the first light source and the second light source emit light respectively; and
controlling, by using the different modulation signals with the phase difference, the at least one detector to receive light from the first metasurface and the second metasurface reflected by the eye of the user simultaneously.

19. An electronic device comprising:
at least one processing unit; and
at least one memory, the at least one memory being coupled to the at least one processing unit and storing instructions for execution by the at least one processing unit, the instructions, when executed by the at least one processing unit, causing the electronic device to perform the method of any one of claims 11 to 16 or any one of claims 17 to 18.

20. A computer-readable storage medium having a computer program stored thereon, the computer program when executed by a processor implementing the method of any one of claims 11 to 16 or any one of claims 17 to 18.
